# EUROPÄISCHE PATENTSCHRIFT

(11) **EP 1 429 305 B1**
(45) Veröffentlichungstag und Bekanntmachung des Hinweises auf die Patenterteilung: **10.01.2007**
(21) Anmeldenummer: 03025940.2
(22) Anmeldetag: 13.11.2003
(51) Int. Cl.: G06F 3/033, B60K 35/00, G01C 21/36

(54) **Fahrzeugrechner-System und Verfahren zur Auswahl und Aktivierung von Auswahlmenüs**
Vehicle computer system and method for choosing from and activating selection menus
Système d'un ordinateur de véhicule et procédé pour choisir et activer de menus de sélection

(30) Priorität: 13.11.2002 DE 10252688
(43) Veröffentlichungstag der Anmeldung: 16.06.2004
(73) Patentinhaber: Harman/Becker Automotive Systems GmbH, 76307 Karlsbad (DE)
(72) Erfinder: Taxis, Heiko, Becker-Göring-Strasse 16 76307 Karlsbad (DE)
(74) Vertreter: Lindner, Michael

(56) Entgegenhaltungen:
- DE-A- 10 032 375
- DE-A- 10 050 223
- DE-A- 10 121 685
- DE-A- 19 941 973
- US-A- 5 774 828

## Beschreibung

Die vorliegende Erfindung betrifft ein Fahrzeugrechner-System mit einer Steuereinrichtung zur Darstellung eines Hauptmenüs und mehrerer Untermenüs, die beide jeweils zumindest einen auswählbaren Menüpunkt enthalten, und einer Bedieneinheit zur Auswahl und Aktivierung eines Menüpunkts innerhalb des Haupt- oder eines Untermenüs. Ferner betrifft die vorliegende Erfindung ein Verfahren zur Auswahl und Aktivierung von Auswahlmenüs in einem Fahrzeugrechner-System.

Fahrzeugrechner-Systeme der vorgenannten Art sind allgemein bekannt. Die Anmelderin bietet beispielsweise unter dem Namen "CarPC" ein System an, mit dem eine Vielzahl von Funktionen innerhalb eines Fahrzeugs gesteuert werden können. So gehört zu dem Funktionsumfang eines solchen Fahrzeugrechner-Systems nicht nur die Bedienung bzw. Steuerung der Audio-Quellen und des Navigationssystems, sondern vielmehr auch der Kommunikations-Einheiten, wie Telephonie, Internet etc., oder aber auch klassischer fahrzeugspezifischer Funktionen, wie Klimatisierung, Sitzverstellung etc.

Das Fahrzeugrechner-System umfasst zur Bedienung dieser Funktionen einen Monitor, auf dem Auswahlmenüs dargestellt werden, über deren Auswahl sich die einzelnen Funktionen aktivieren lassen. Die Auswahlmenüs sind üblicherweise hierarchisch aufgebaut und enthalten eine Hauptmenüebene und eine oder mehrere darunter liegende Untermenüebenen. Das Hauptmenü sowie die Untermenüs enthalten wiederum jeweils mehrere Menüpunkte, die zur Auswahl angeboten werden.

Die Auswahl eines Menüpunkts sowohl im Hauptmenü als auch in den Untermenüs erfolgt mittels einer Bedieneinheit, die üblicherweise als so genannter Dreh-/Drücksteller ausgebildet ist. Durch Drehen des Dreh-/Drückstellers lässt sich ein Cursor von einem Menüpunkt zum nächsten bewegen, während die Aktivierung, d.h. die Wahl eines Menüpunkts, durch Drücken dieses Dreh/Drückstellers erfolgt. Eine solche Steuerung ist bspw. aus DE 100 50 223 A1 bekannt, oder aus US 5,774,828, DE 199 41 973 A1 oder DE 100 32 375 A1.

Ein Bedienelement ist bspw. aus DE 101 21 685 A1 bekannt.

Sehr häufig ist zur schnelleren Navigation innerhalb der Auswahlmenüs ein so genannter Hardkey (Tastschalter) vorgesehen, mit dem von jeder beliebigen Menüebene heraus in das Hauptmenü gesprungen werden kann.

Möchte der Benutzer des Fahrzeugrechner-Systems nun von einem einem Hauptmenüpunkt zugeordneten Untermenü zu einem anderen Hauptmenüpunkt gelangen, muss er zunächst beispielsweise durch Drücken des Hardkeys in das Hauptmenü zurück springen, dann den Dreh-/Drücksteller drehen, bis der Cursor auf dem gewünschten Hauptmenüpunkt steht, um schließlich durch Drücken des Dreh/Drückstellers diesen Hauptmenüpunkt zu aktivieren und damit in das darunter liegende Untermenü zu gelangen.

Obgleich sich diese Bedienung in der Praxis bewährt hat, besteht gerade im Fahrzeugbereich der Wunsch, die Ergonomie eines Fahrzeugrechner-Systems und damit die Bedienungsfreundlichkeit weiter zu erhöhen.

Die Aufgabe der vorliegenden Erfindung besteht deshalb darin, das Fahrzeugrechner-System der eingangs genannten Art so weiterzubilden, dass es eine einfachere und damit ergonomischere Bedienung zulässt.

Diese Aufgabe wird bei dem Fahrzeugrechner-System der vorgenannten Art dadurch gelöst, dass ein zusätzliches Schaltelement vorgesehen ist, dessen wiederholte Betätigung die Steuereinrichtung veranlasst, die einzelnen Menüpunkte des Hauptmenüs nach einer vorgegebenen Reihenfolge zu aktivieren.

D.h. mit anderen Worten, dass die Funktionen des Zurückspringens in das Hauptmenü, das Bewegen des Cursors auf einen Menüpunkt des Hauptmenüs und die Aktivierung dieses Menüpunkts, um in die darunter liegende Untermenüebene zu gelangen, alleine über das Betätigen des Schaltelements erfolgt. Dabei wird mit jeder weiteren Betätigung des Schaltelements der nächste Hauptmenüpunkt aktiviert. Damit lassen sich durch wiederholtes Betätigen des Schaltelements alle Menüpunkte des Untermenüs der Reihe nach auf dem Bildschirm darstellen, wobei nach Erreichen des letzten Menüpunkts wieder zum ersten Menüpunkt gesprungen wird. Die einzelnen Untermenüpunkte des jeweils dargestellten Untermenüs können dann in gewohnter Weise mittels des Dreh/Drückstellers ausgewählt und aktiviert werden.

Es zeigt sich folglich, dass dieses Schaltelement eine deutliche Vereinfachung der Bedienung des Fahrzeugrechner-Systems ermöglicht. Insbesondere kann der Benutzer mit reduziertem Sichtkontakt zu dem Monitor zu den gewünschten Untermenüpunkten navigieren.

Bevorzugt ist die Bedieneinheit als Dreh-/Drücksteller ausgebildet und umfasst ein weiteres Schaltelement, mit dem in das Hauptmenü umgeschaltet werden kann. D.h. mit anderen Worten, dass durch Betätigen dieses weiteren Schaltelements die Menüpunkte des Hauptmenüs auf dem Bildschirm des Fahrzeugrechner-Systems dargestellt werden, unabhängig davon, wo sich der Benutzer innerhalb der Auswahlmenüs gerade befindet.

Es wäre jedoch auch denkbar, die Bedieneinheit als Kreuz-Wippen-Schalter auszubilden. Aufgrund des zusätzlichen Freiheitsgrades (links/rechts Schalter) im Vergleich zu einem Dreh/Drücksteller ist es möglich, der Kreuz-Wippe eine zusätzliche Funktion zuzuordnen. Hierbei könnte es sich beispielsweise um die Funktion "Back" (zurück zum Hauptmenü oder zurück in die nächst höhere Menüebene) handeln. Bei bisherigen Lösungen ist häufig ein extra Hard-Key für diese Funktion vorgesehen.

In einer bevorzugten Weiterbildung ist eine Auswerteeinrichtung vorgesehen, die die Auswahl von Menüpunkten des Hauptmenüs registriert und zu jedem Menüpunkt einen Häufigkeitswert bestimmt.

D.h. mit anderen Worten, dass die Auswerteeinrichtung registriert, welche Untermenüpunkte, vorzugsweise der direkt der Hauptmenüebene folgenden Ebene, vom Benutzer ausgewählt werden. Diese Häufigkeitswerte lassen sich dann vorteilhafterweise dazu benutzen, die Reihenfolge der durch Betätigen des Schaltelements aktivierten Hauptmenüpunkte festzulegen. Um die Navigation zu beschleunigen, könnten bei jeder neuen Navigation die am häufigsten benutzten Menüpunkte durch Betätigen des Schaltelements der Reihe nach auf dem Bildschirm dargestellt werden. Eine "neue Navigation" beginnt für das Fahrzeugrechner-System beispielsweise immer dann, wenn vor dem Betätigen des Schaltelements ein Untermenüpunkt über die Bedieneinheit ausgewählt und aktiviert wurde.

Selbstverständlich wäre es auch vorstellbar, dass die Reihenfolge der Aktivierung der Hauptmenüpunkte durch Betätigen des Schaltelements frei wählbar ist.

Dies hätte den Vorteil, dass eine Anpassung an die Vorlieben des Benutzers möglich wäre.

Eine weitere Anpassung des Fahrzeugrechner-Systems könnte darin bestehen, dass der Benutzer die über das Schaltelement erreichbaren Hauptmenüpunkte einschränkt auf diejenigen, die für ihn am wichtigsten sind.

Auch diese Maßnahme wird einen weiteren Beitrag zu einer besseren Anpassung liefern.

Die der Erfindung zugrunde liegende Aufgabe wird auch von einem Verfahren zur Auswahl und Aktivierung von Auswahlmenüs in einem Fahrzeugrechner-System dadurch gelöst, dass durch wiederholtes Betätigen eines zusätzlichen Schaltelements die Hauptmenüpunkte einer vorgegebenen Reihenfolge nach ausgewählt und aktiviert werden können.

Dieses Verfahren liefert die bereits zuvor im Zusammenhang mit dem Fahrzeugrechner-System genannten Vorteile, so dass auf eine Wiederholung an dieser Stelle verzichtet wird.

Es ist bevorzugt, die Reihenfolge der Auswahl und Aktivierung der Hauptmenüpunkte durch Betätigen des Schaltelements einstellbar auszugestalten. Besonders bevorzugt wird die Reihenfolge entsprechend einer Häufigkeit der benutzten Hauptmenüpunkte festgelegt.

Ferner ist bevorzugt, nach der Betätigung des Schaltelements und einer anschließenden Auswahl und Aktivierung eines Untermenüpunkts die Reihenfolge bezüglich der Auswahl und Aktivierung der Hauptmenüpunkte von vorne zu beginnen.

Weitere Merkmale und Vorteile der Erfindung ergeben sich aus der nachfolgenden Beschreibung und den beigefügten Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein schematisches Diagramm des Aufbaus von Auswahlmenüs;
- Fig. 2: ein schematisches Blockschaltdiagramm eines Fahrzeugrechner-Systems in stark vereinfachter Form; und
- Fig. 3: eine Tabelle zur Erläuterung des erfindungsgemäßen Verfahrens.

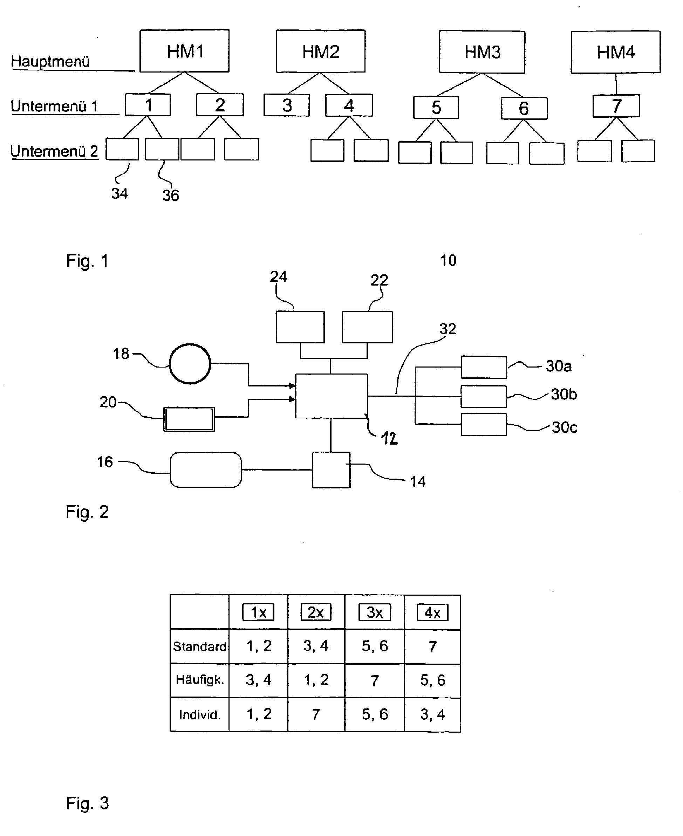

In Fig. 2 ist in schematischer Darstellung ein Fahrzeugrechner-System gezeigt und mit dem Bezugszeichen 10 gekennzeichnet. Das Fahrzeugrechner-System 10 umfasst eine Steuereinrichtung 12, die beispielsweise in Form eines an ein Fahrzeug angepassten PCs ausgebildet sein kann.

Die Steuereinrichtung 12 ist mit einer Ansteuerungseinheit 14 verbunden, die Steuersignale an einen Monitor 16 liefert. Dieser Monitor 16 ist üblicherweise im Armaturenbrett des Fahrzeugs für den Fahrer gut sichtbar untergebracht.

Zur Bedienung des Fahrzeugrechner-Systems sind im vorliegenden Ausführungsbeispiel ein so genannter Dreh-/Drücksteller 18 und ein Schaltelement 20 in Form eines Tasters vorgesehen.

Mit der Steuereinrichtung 12 ist ferner ein Speicher 22 sowie eine Auswerteeinrichtung 24 verbunden, auf deren Funktion später noch eingegangen wird.

Mit Hilfe des Fahrzeugrechner-Systems 10 lassen sich unterschiedlichste Komponenten innerhalb eines Fahrzeugs bedienen und steuern, beispielsweise eine Audio-Komponente, die Radio, CD und Kassettenrekorder umfasst, eine Navigations-Komponente mit Routenführung, Telematikdiensten etc., eine Telephonie- und Internet-Komponente oder eine Klimatisierungs-Komponente, um nur einige wenige zu nennen. Diese Komponenten sind in Fig. 2 schematisch dargestellt und mit dem Bezugszeichen 30a, 30b, 30c gekennzeichnet. Die Ansteuerung selbst erfolgt im günstigsten Fall über ein Bussystem, das in Fig. 2 mit dem Bezugszeichen 32 gekennzeichnet ist. Bei dem Bussystem kann es sich beispielsweise um ein so genanntes CAN-Bussystem handeln.

Die Bedienung dieser Komponenten kann nun alleine über den Dreh-/Drücksteller 18 erfolgen, mit dem auf dem Monitor 16 dargestellte Auswahlmenüs ausgewählt und aktiviert werden können. Die zur Verfügung stehenden Auswahlmenüs selbst sind in dem Speicher 22 abgelegt und können von der Steuereinrichtung 12 abgerufen und zur Darstellung über die Ansteuerungseinheit 14 zum Monitor 16 übertragen werden.

Der Aufbau von Auswahlmenüs ist schematisch in Fig. 1 dargestellt. Gut zu erkennen ist der hierarchische Aufbau, der sich in mehrere Ebenen, so genannte Menüebenen oder kurz Menüs, gliedert. Die höchste Menüebene bildet hierbei das Hauptmenü, das rein beispielhaft bei der vorliegenden Ausführungsform vier Hauptmenüpunkte HM1 - HM4 enthält. Jeder Hauptmenüpunkt HM1-HM4 könnte hierbei für eine zu bedienende Komponente 30 stehen.

Die nächste Menüebene bildet das Untermenü 1, das hier insgesamt sieben Menüpunkte enthält, wobei die Untermenüpunkte 1, 2 dem ersten Hauptmenü HM1, die Menüpunkte 3, 4 dem zweiten Hauptmenüpunkt HM2, die Menüpunkte 5, 6 dem dritten Hauptmenüpunkt HM3 und der Menüpunkt 7 dem Hauptmenüpunkt HM4 zugeordnet sind. An diese Untermenüebene 1 können sich weitere Untermenüebenen (im vorliegenden Fall nur die Untermenüebene 2) anschließen.

Möchte der Benutzer beispielsweise einen Menüpunkt 34 der Untermenüebene 2 aktivieren, muss er zunächst in der Hauptmenüebene den Menüpunkt HM1 auswählen und aktivieren. Dies hat zur Folge, dass die untergeordneten Menüpunkte 1, 2 des Untermenüs 1 auf dem Monitor 16 dargestellt werden. Über den Dreh/Drücksteller 18 wählt er nun den Menüpunkt 1 aus und aktiviert ihn durch Drücken des Dreh-/Drückstellers, so dass auf dem Monitor 16 nun die beiden Menüpunkte 34 und 36 zur Auswahl dargestellt werden. Der Benutzer wird wiederum den Dreh-/Drücksteller drehen, um die Auswahlmarkierung bzw. den Cursor auf den Menüpunkt 34 zu bringen, und den Dreh-/Drücksteller 18 dann drücken, um diesen Menüpunkt 34 zu aktivieren.

Zur Vereinfachung der Navigation innerhalb der Auswahlmenüs ist nun das Schaltelement 20 vorgesehen, dessen Betätigung zur Folge hat, dass die Steuereinrichtung 12 mit jeder Betätigung der Reihe nach die Hauptmenüpunkte HM1 - HM4 auswählt und aktiviert. Das bedeutet mit anderen Worten, dass der Reihe nach die Untermenüpunkte 1, 2 des Untermenüs 1, dann die Untermenüpunkte 3, 4, dann die Untermenüpunkte 5, 6 und schließlich der Untermenüpunkt 7 auf dem Monitor 16 dargestellt werden. Nach dem viermaligen Betätigen des Schaltelements 20 beginnt die Reihe dann wieder mit dem Hauptmenüpunkt HM1 und folglich der Darstellung der Untermenüpunkte 1, 2.

In Fig. 3 ist in der gezeigten Tabelle in der zweiten Zeile dargestellt, welche Untermenüpunkte beim Betätigen des Schaltelements 20 auf dem Monitor 16 dargestellt werden.

Das Schaltelement 20 vereinigt somit mehrere Bedienvorgänge in einem Element, nämlich zunächst die Auswahl eines Hauptmenüpunkts durch Drehen des Dreh-/Drückstellers 18 und dann die Aktivierung des ausgewählten Menüpunkts durch Drücken des Dreh/Drückstellers 18. Die Auswahl des Hauptmenüpunkts HM1 - HM4 erfolgt hierbei im einfachsten Fall nach einer fest vorgegebenen Reihenfolge, im vorliegenden Ausführungsbeispiel in der Reihenfolge HM1, HM2, HM3, HM4.

Es wäre jedoch auch denkbar, dass der Benutzer diese Reihenfolge selbst festlegen und im Speicher 22 speichern kann. Eine solche individuelle Reihenfolge ist beispielsweise in der vierten Zeile der in Fig. 3 gezeigten Tabelle dargestellt.

Neben dieser eher statischen Festlegung der Reihenfolge ist es auch denkbar, die Reihenfolge dynamisch durch die Steuereinrichtung 12 festlegen zu lassen. Als Kriterium zur Festlegung der Reihenfolge käme beispielsweise die Häufigkeit der Auswahl bestimmter Hauptmenüpunkte in Frage. Hierfür weist das Fahrzeugrechner-System 10 die Auswerteeinrichtung 24 auf, die die Auswahl und Aktivierung von Menüpunkten des Untermenüs 1 zahlenmäßig festhält und den zughörigen Hauptmenüpunkten HM1 bis HM4 zuordnet. D.h. mit anderen Worten, dass dem Hauptmenüpunkt HM1 beispielsweise ein großer Häufigkeitswert zugeordnet wird, wenn der Benutzer sehr häufig die Menüpunkte 1 und 2 des Untermenüs 1 auswählt und aktiviert.

Die von der Steuereinrichtung 12 festgelegte Reihenfolge der ausgewählten und aktivierten Hauptmenüpunkte HM1 - HM4 beim Betätigen des Schaltelements 20 kann nun an Hand dieser Häufigkeitswerte erfolgen.

Bei allen drei vorgenannten Möglichkeiten der Reihenfolgenbildung wird die vorgegebene Reihenfolge stets eingehalten, d.h. mit jedem Betätigen des Schaltelements 20 wird zu dem der Reihenfolge entsprechenden nächsten Hauptmenüpunkt gesprungen. Ist das Ende der Reihenfolge erreicht, wird wieder zum ersten Element der Reihenfolge gesprungen. Es spielt dabei keine Rolle, ob zwischenzeitlich weitere Untermenüpunkte aktiviert wurden oder eine größere Zeitspanne zwischen zwei aufeinanderfolgenden Betätigungen des Schaltelements 20 vergangen ist.

Alternativ hierzu ist es jedoch auch vorstellbar, die Reihenfolge dann wieder am Anfang beginnen zu lassen, wenn nach der Betätigung des Schaltelements 20 einer der Menüpunkte des Untermenüs 1 ausgewählt wird. Das bedeutet, dass bei einer Standardreihenfolge und zweimaliger Betätigung des Schaltelements 20 und Auswahl und Aktivierung einer der beiden Menüpunkte 3, 4 bei der nächsten Betätigung des Schaltelements 20 wieder die beiden Menüpunkte 1, 2 des Untermenüs 1 auf dem Monitor 16 dargestellt werden (also die Reihenfolge der Hauptmenüpunkte wieder von vorne beginnt).

Neben diesem Kriterium könnte selbstverständlich auch die Zeitspanne zwischen aufeinander folgenden Betätigungen des Schaltelements 20 herangezogen werden. Übersteigt die Zeitspanne beispielsweise einen vorgegebenen Wert, könnte die Reihenfolge wieder von vorne beginnen.

Nach alledem zeigt sich, dass durch das Vorsehen des zusätzlichen Schaltelements 20 eine deutliche Vereinfachung der Navigation innerhalb von Auswahlmenüs ermöglicht wird. Der Benutzer kann mit deutlich weniger Bedienvorgängen zu dem gewünschten Untermenüpunkt gelangen.

## Patentansprüche

1. Fahrzeugrechner-System mit
- einer Steuereinrichtung (12) zur Darstellung eines Hauptmenüs und mehrerer Untermenüs, die beide jeweils zumindest einen auswählbaren Menüpunkt enthalten, und
- einer Bedieneinheit (18) zur Auswahl und zur Aktivierung eines Menüpunkts innerhalb des Haupt- oder eines Untermenüs,
**gekennzeichnet durch** ein zusätzliches Schaltelement (20), dessen wiederholte Betätigung die Steuereinrichtung (12) veranlasst, die einzelnen Menüpunkte (HM1 - HM4) des Hauptmenüs nach einer vorgegebenen Reihenfolge zu aktivieren.

2. Fahrzeugrechner-System nach Anspruch 1, **dadurch gekennzeichnet, dass** die Bedieneinheit (18) ein Dreh-/Drücksteller ist.

3. Fahrzeugrechner-System nach Anspruch 1 oder 2, **dadurch gekennzeichnet, dass** ein weiteres Schaltelement zum Umschalten in das Hauptmenü vorgesehen ist.

4. Fahrzeugrechner-System nach Anspruch 1, **dadurch gekennzeichnet, dass** eine Auswerteeinrichtung (24) vorgesehen ist, die die Auswahl von Menüpunkten des Hauptmenüs registriert und zu jedem Menüpunkt (HM1-HM4) einen Häufigkeitswert bestimmt.

5. Fahrzeugrechner-System nach Anspruch 4, **dadurch gekennzeichnet, dass** die Steuereinrichtung (12) die Reihenfolge entsprechend der Häufigkeitswerte festlegt.

6. Fahrzeugrechner-System nach Anspruch 1, **dadurch gekennzeichnet, dass** die Reihenfolge der Aktivierung der Menüpunkte des Hauptmenüs einstellbar ist.

7. Fahrzeugrechner-System nach einem der vorhergehenden Ansprüche, **dadurch gekennzeichnet, dass** die zur Darstellung vorgesehenen Menüpunkte auswählbar sind.

8. Verfahren zur Auswahl und Aktivierung von Auswahlmenüs in einem Fahrzeugrechner-System, wobei die Auswahlmenüs ein Hauptmenü mit zumindest zwei Hauptmenüpunkten und zumindest ein Untermenü mit zumindest zwei Untermenüpunkten enthalten, die über eine Bedieneinheit (18) auswählbar und aktivierbar sind, **dadurch gekennzeichnet, dass** durch wiederholtes Betätigen eines zusätzlichen Schaltelements (20) die Hauptmenüpunkte nach einer vorgegebenen Reihenfolge ausgewählt und aktiviert werden können.

9. Verfahren nach Anspruch 8, **dadurch gekennzeichnet, dass** die Reihenfolge der Auswahl und Aktivierung der Hauptmenüpunkte durch Betätigen des Schaltelements einstellbar ist.

10. Verfahren nach Anspruch 9, **dadurch gekennzeichnet, dass** die Reihenfolge entsprechend einer Häufigkeit der benutzten Hauptmenüpunkte festgelegt wird.

11. Verfahren nach einem der Ansprüche 8 bis 10, **dadurch gekennzeichnet, dass** nach der Betätigung des Schaltelements und einer anschließenden Auswahl und Aktivierung eines Untermenüpunkts die Reihenfolge bezüglich Auswahl und Aktivierung der Hauptmenüpunkte von vorne beginnt.

## Claims

1. In-car computer system comprising
- a control device (12) for displaying a main menu and plural sub-menus, each containing at least one selectable menu item, and
- an operating unit (18) for selecting and activating a menu item within the main menu or sub-menu,
**characterized by** an additional switching member (20), its repeated operation causing the control device (12) to activate the individual menu items (HM1 - HM4) of the main menu in a predetermined order.

2. The in-car computer system of claim 1, **characterized in that** the operating unit (18) is a rotary/push button.

3. The in-car computer system of claim 1 or 2, **characterized in that** a further switching member is provided for switching to the main menu.

4. The in-car computer system of claim 1, **characterized in that** an evaluation device (24) is provided which registers the activation of menu items and determines a frequency value for each menu item (HM1 - HM4).

5. The in-car computer system of claim 4, **characterized in that** said control device (12) determines the order according to the frequency values.

6. The in-car computer system of claim 1, **characterized in that** the order of menu items of the main menus is adjustable.

7. The in-car computer system of anyone of the preceding claims, **characterized in that** the menu items intended for being displayed are selectable.

8. Method for selecting and activating option menus in an in-car computer system, the option menus containing a main menu with at least two main menu items and at least a sub-menu with at least two sub-menu items, which are selectable and activatable by means of an operating unit (18), **characterized in that** by a repeated activation of an additional switching member (20) the main menu items are selected and activated according to a predetermined order.

9. The method of claim 8, **characterized in that** said order of selection and activation of the main menu items is adjustable by operating the switching member.

10. The method of claim 9, **characterized in that** said order is determined according to a frequency value of the main menu items used.

11. The method of anyone of claims 8 to 10, **characterized in that** after operating the switching member and selecting and activating a sub-menu item said order starts again from the beginning with respect to selection and activation of the main menu items.

## Revendications

1. Système d'ordinateur de bord de véhicule comprenant :
- un dispositif de commande (12) destiné à représenter un menu principal et plusieurs sous-menus, qui contiennent tous les deux respectivement au moins un point de menu pouvant être sélectionné, et
- une unité opérationnelle (18) destinée à sélectionner et à activer un point de menu à l'intérieur du menu principal ou du sous-menu,
**caractérisé par** un élément de commutation additionnel (20), dont l'actionnement répété amène le dispositif de commande (12) à activer les points de menu individuels (HM1 - HM4) du menu principal selon un ordre prédéfini.

2. Système d'ordinateur de bord selon la revendication 1, **caractérisé en ce que** l'unité opérationnelle (18) est un actionneur de rotation/de pression.

3. Système d'ordinateur de bord selon la revendication 1 ou 2, **caractérisé en ce qu'**un autre élément de commutation est prévu pour passer en menu principal.

4. Système d'ordinateur de bord selon la revendication 1, **caractérisé en ce qu'**il est prévu un dispositif d'analyse (24), qui enregistre la sélection des points de menu du menu principal et définit pour chaque point de menu (HM1 - HM4) une valeur de fréquence.

5. Système d'ordinateur de bord selon la revendication 4, **caractérisé en ce que** le dispositif de commande (12) détermine l'ordre en fonction des valeurs de fréquence.

6. Système d'ordinateur de bord selon la revendication 1, **caractérisé en ce qu'**il est possible de régler l'ordre d'activation des points de menu du menu principal.

7. Système d'ordinateur de bord selon l'une quelconque des revendications précédentes, **caractérisé en ce qu'**il est possible de sélectionner les points de menu prévus pour la représentation.

8. Procédé de sélection et d'activation du menu de sélection dans un système d'ordinateur de bord de véhicule, les menus de sélection contenant un menu principal comprenant au moins deux points de menu principal et au moins un sous-menu comprenant au moins deux points de sous-menu, qui peuvent être sélectionnés et activés par une unité opérationnelle (18), **caractérisé en ce qu'**en actionnant de façon répétée un élément de commutation additionnel (20), il est possible de sélectionner et d'activer les points de menu principal selon un ordre prédéfini.

9. Procédé selon la revendication 8, **caractérisé en ce que** l'ordre de la sélection et de l'activation des points de menu principal peut être réglé en actionnant l'élément de commutation.

10. Procédé selon la revendication 9, **caractérisé en ce que** l'ordre est déterminé en fonction d'une fréquence des points de menu principal utilisés.

11. Procédé selon l'une quelconque des revendications 8 à 10, **caractérisé en ce qu'**après avoir actionné l'élément de commutation et sélectionné et activé ensuite un point de sous-menu, l'ordre de sélection et d'activation des points de menu principal démarre à nouveau.
